# EUROPEAN PATENT SPECIFICATION

(11) **EP 0 704 411 B1**
(45) Date of publication and mention of the grant of the patent: **28.01.1998**
(21) Application number: 95108820.2
(22) Date of filing: 08.06.1995
(51) Int. Cl.: C04B 33/14, C04B 41/50

(54) **Process for colouring ceramics products**
Verfahren zur Färbung keramischer Produkte
Procédé de coloration de produits céramiques

(30) Priority: 27.09.1994 IT MI941965
(43) Date of publication of application: 03.04.1996
(73) Proprietor: Vignali, Graziano, I-40037 Sasso Marconi (Bologna) (IT)
(72) Inventor: Vignali, Graziano, I-40037 Sasso Marconi (Bologna) (IT)
(74) Representative: Gervasi, Gemma, Dr.

(56) References cited:
- US-A- 3 423 228
- DATABASE WPI Week 9011 Derwent Publications Ltd., London, GB; AN 90-078166 & JP-A-02 029 477 (TANAKA) , 31 January 1009
- CHEMICAL ABSTRACTS, vol. 109, no. 20, 14 November 1988 Columbus, Ohio, US; abstract no. 175319g, page 310; column L; & CS-A-248 541 (M.TROJAN) 16 May 1988
- PATENT ABSTRACTS OF JAPAN vol. 15 no. 365 (E-1111) ,13 September 1991 & JP-A-03 142894 (TANAKA) 18 June 1991,

## Description

### Field of the invention

The present invention relates to a process for colouring ceramic products using compositions consisting of water solutions of ruthenium salts of organic acids, which allow the obtainment of black ceramics or, when used in combination with the colouring compositions of the prior art, of deeper-coloured products (the amount of colour used being the same) than obtainable by the latter compositions.

### B. State of the art

The use of coloured ceramics as well as the compositions and processes meant for obtaining said colourings have been known since long. One of the most common methods is based on the addition of powdered pigments, in particular inorganic oxides and mineral colouring agents, to the ceramic mass before firing. The ceramic product obtained is coloured through its whole thickness, with considerable consumption of colouring matter, which is the most expensive component.

Considering that colouring inside ceramic articles is superfluous, the material being not transparent, studies were conducted to develop methods for colouring the ceramics surface only, with a considerable saving of costly materials.

The methods developed to this end are based on pigments addition to the surface of ceramics (in particular tiles), already in the mould, before final pressing and firing. Said methods are material-saving since colouring affects only a thin layer of the ceramic product, but can be hardly viable as they require devices for metering and feeding, in the moulds for ceramics, the amounts and types of colouring agents needed for obtaining the desired products.

Another process consists in causing the surface of the ceramic material to absorb a water solution of inorganic salts or of metal complexes (as described, e.g., in Sprechsal, vol. 119, No. 10, 1986) after partial firing (as disclosed, e.g., in German patent No. 2,012,304) or simply after moulding and before firing (as disclosed, e.g., in Swiss patent No. 575,894), said inorganic salts and metal complexes being transformed into colours, stable at a high temperature, during ceramic firing.

The water solution is applied to the ceramic material e.g. by dipping or spraying or disk treatment before final firing.

A colouring of this type is particularly advantageous because very thin coloured layers can be obtained. It is widely used in the case of flat articles, such as for example tiles for floors and walls. Unfortunately, however, the colourings available so far are very few and the need for high concentrations of colouring matter to obtain intense shades of colours in the finished product makes said products very costly.

A further problem set by the use of colours in water solution is the depth to which the colouring matter penetrates into the ceramic material. In fact, experimental evidences have been provided that the penetration depth depends on various parameters, such as the colouring solution viscosity and surface tension, the application temperature, the quantity of water applied after application of the colouring solution, the application technique.

This last parameter, i.e. the application technique, is of great importance: in fact, whereas the amount of colour that may be applied by disk treatment or spraying may be as high as 400 to 600 g/m², by silk-screen techniques it may be as low as 80 to 100 g/m².

Silk-screen methods are particularly asked for being the only methods that allow the obtainment of graphics, drawings and decorations, and requiring lower amounts of colouring matter. Colouring matter penetration into the ceramic material before firing takes place with relatively high amounts of water after application of the colouring solution: however, the resulting colours are less intense than obtainable by the other techniques.

Colouring matter penetration into the ceramic material is of particular importance in the case of smoothed vitrified stoneware tiles. This phrase is used herein to mean a vitrified stoneware whose surface is abraded by diamond wheels through a thickness of 0.8 to 1.5 mm, smoothed and felt-polished to a glassy surface. Obviously, colouring of stoneware to be polished after firing will require colour penetration to a depth of at least 1.6 mm.

### C. Technical problem

Since colouring of ceramic materials by disk treatment or spraying is easy to carry out, the ceramic industry is obviously highly interested in finding new substances compatible with said techniques.

The technical problem to be solved is that said new substances be easily transformed into colouring matters stable at a high temperature, that the manufacture obtained be in the desired colour and in the desired shade, without too great a consumption of colouring matter, and that colour penetration into the ceramic material be deep.

### D. Detailed description of the invention

The Applicant, who has many years' experience in the production and sale of materials for colouring ceramic tiles, has now found that ruthenium salts of organic acids give a splendid black colouring to ceramic products, in particular to vitrified stoneware tiles, either smoothed or not, also by silk-screen processes. Furthermore, the Applicant has surprisingly found that the water solutions of ruthenium salts exhibit a penetration power that is decidedly superior to that of the water solutions of compounds of other metals already known.

It is an object of the present invention to provide a process using water solutions of ruthenium salts of organic acids for treating ceramic ware before firing to obtain, after firing, black ceramics.

It is an important object of the present invention to provide a process for colouring ceramic articles using a mixture of ruthenium salts of organic acids with the other commercially available metal salts of organic acids used for ceramics colouring, capable of giving much more intense colourings than obtainable without ruthenium.

This is a salient advantage of the present invention a very intense colourings are obtained in the presence of much lower amounts of metal salts than required according to the prior art.

In fact, ruthenium salts of organic acids mixed with colouring matter of another type at a ratio of 1:4 to 1:100 (expressed as metal elements and by weight) are enough to provide a considerable increase in the final colour intensity when compared with the intensity obtainable by the sole use of the other colouring matter, the other conditions being obviously the same.

The ruthenium salts of organic acids to be used according to the present invention must have such solubility in water that the resulting water solutions contain ruthenium salts of organic acids at a concentration of 0.5% to 15% by weight (which are appropriate for industrial application).

Although the salts of sulphuric, hydrochloric, and nitric acids are particularly economic and suitable for obtaining the desired colours, they bring about the formation of corrosive gases during firing; consequently, kilns provided with flue gas abatement devices are required.

According to the present invention ruthenium salts of organic acids are used that, during firing, are thermally decomposed to give water and carbon dioxide.

These are the salts of mono- or polycarboxylic acids containing 1 to 18 carbon atoms, with 1 to 3 hydroxylic substituents and/or 1 to 3 aminic substituents, if any, in the aliphatic chain.

According to the present invention, suitable organic salts are those with polycarboxylic acids, in particular polymers and copolymers of acrylic or methacrylic acid and vinyl ether copolymers with maleic anhydride and acrolein.

The amount of ruthenium salts of organic acids to be added to the ceramic material prior to firing to obtain black manufactures must be such as to secure the application of 2 to 10 g/m² ruthenium (expressed a element) to the ceramic surface.

In the embodiments of the present invention wherein ruthenium salts are added to water solutions of other salts used as ceramics colouring agents, a considerable increase in the colour deep shade is typically obtained using an amount of ruthenium (expressed as element) equalling 2% to 15% by wt. of the total amount of the other colouring agents of the solution (expressed on the basis of their metal elements content).

The addition of ruthenium organic salts to water solutions of other salts is particularly effective in the case of solutions of cobalt, iron, chromium, vanadium and nickel salts.

The typical process for the application of the colouring compositions according to the invention consists of the following steps:
a) drying at 100°C of the moulded article to be coloured to a water residue of 0.5% by wt. max.;
b) pretreatment, if any, of the dried article with water in an amount of 300 g/m² ceramic product max.;
c) treatment of the pretreated article with the colouring composition in water solution in an amount of 30 to 600 g/m² of the final coloured surface;
d) posttreatment, if any, of the article treated with water in an amount of 300 g/m² ceramic product max.
e) equalization of the posttreated article at room temperature for a period of 8 hours and firing according to the normal ceramic cycle.

The following examples illustrate some embodiments of the invention obtained with vitrified stoneware tiles made of ceramic mass having the composition mentioned below (by weight):
SiO₂=67.8%; Al₂O₃=23%; K₂O=4.0%; Na₂O=0.8%; CaO=0.6%; MgO=0.1%; TiO₂=0.4%; Fe₂O₃=0.2%.

### Examples 1 to 6

A series of colouring tests were conducted according to the following process.

Some 33 cm x 33 cm tiles were press moulded, dried at 100°C to a water residue of 0.1% (weight loss after 4 hrs at 120°C), sprayed with distilled water (pretreatment), with the colouring agent in water solution (treatment), and finally with distilled water (posttreatment).

Once the tiles had undergone said treatment, they were allowed to stand at room temperature for 8 hrs (equalization) and fired in a roller kiln according to a standard cycle for vitrified stoneware (at a temperature of 1200°C max.).

After firing, one tile was cut and colour penetration was measured by an optical microscope. Another tile was smoothed by diamond wheel abrasion through 1.2 mm and the colour layer thickness was recorded.

The parameters used in the various tests and the results obtained are reported in Table 1.

**Table 1**

| (1) | (2) | (3) | (4) | (5) | (6) | (7) |
|---|---|---|---|---|---|---|
| 1 | 0 | 100 | 0 | 0.7 | black | colourless |
| 2 | 0 | 200 | 0 | 1.3 | black | greyish green |
| 3 | 100 | 100 | 0 | 0.8 | black | colourless |
| 4 | 100 | 200 | 0 | 1.4 | black | blackish grey |
| 5 | 100 | 100 | 150 | 1.4 | blackish grey | black |
| 6 | 100 | 200 | 150 | 2.0 | black | black |

Remark: columns show the following data:
(1) Example number
(2) distilled water used in pretreatment (g/m²)
(3) 6% water solution of ruthenium organic acid salt (available under the trademark Metcolour P100 from Metco s.r.l.) used in treatment (g/m²)
(4) distilled water used in posttreatment (g/m²)
(5) colour penetration (mm)
(6) surface colour before smoothing
(7) surface colour after smoothing

### Examples 7 to 12 (comparison)

A series of colouring tests was conducted by way of comparison on the same tiles as and according to the method of Example 1 except that the type of colouring solution was changed.

The parameters used in the various tests and the results obtained are reported in Table 2.

**Table 2**

| (1) | (2) | (3) | (4) | (5) | (6) | (7) |
|---|---|---|---|---|---|---|
| 7 | 0 | 100 | 0 | 0.65 | black | colourless |
| 8 | 0 | 200 | 0 | 1.15 | black | sky-blue spots |
| 9 | 100 | 100 | 0 | 0.8 | black | colourless |
| 10 | 100 | 200 | 0 | 1.25 | black | sky-blue |
| 11 | 100 | 100 | 150 | 1.15 | grey | blue |
| 12 | 100 | 200 | 150 | 1.30 | grey | dark grey |

Remark: columns show the following data:
(1) Example number
(2) distilled water used in pretreatment (g/m²)
(3) water solution of organic complexes consisting of mixtures of polycarboxylic acids of iron (5%) and cobalt (3.5%) (expressed as elements) (available under the trademark Metcolour E 285 from Metco s.r.l.) used in treatment (g/m²)
(4) distilled water used in posttreatment (g/m²)
(5) colour penetration (mm)
(6) surface colour before smoothing
(7) surface colour after smoothing

### Examples 13 to 21

A series of colouring tests were conducted according to the following process.

Some 33 cm x 33 cm tiles were press moulded, dried at 100°C to a water residue of 0.1% (weight loss after 4 hrs at 120°C), sprayed with distilled water (pretreatment), silk-screened with a paste obtained by thickening the colouring agent water solution (treatment), and sprayed again with distilled water (posttreatment).

All colouring solutions were thickened by means of a thickening agent based on glucomannans.

The 21-thread mesh silk screen used allowed the application of colouring paste in an amount of 65 g/m².

Once the tiles had undergone said treatment, they were allowed to stand at room temperature for 8 hrs (equalization) and fired in a roller kiln according to a standard cycle for vitrified stoneware (at a temperature of 1200°C max.).

After firing, one tile was cut and colour penetration was measured by an optical microscope. Another tile was smoothed by diamond wheel abrasion through 1.2 mm and the colour layer thickness was recorded.

The parameters used in the various tests and the results obtained are reported in Table 3.

**Table 3**

| (1) | (2) | (3) | (4) | (5) | (6) | (7) |
|---|---|---|---|---|---|---|
| 13 | 0 | 65 | 0 | 0.2 | blackish blue | colourless |
| 14 | 100 | 65 | 0 | 0.4 | dark blue | colourless |
| 15 | 100 | 65 | 150 | 1.4 | dark sky-blue | sky-blue |
| 16 | 0 | 65 | 0 | 0.2 | blackish grey | colourless |
| 17 | 100 | 65 | 0 | 0.4 | dark grey | colourless |
| 18 | 100 | 65 | 150 | 1.4 | grey | greenish grey |
| 19 | 0 | 65 | 0 | 0.6 | black | colourless |
| 20 | 100 | 65 | 0 | 1.2 | black | black spots |
| 21 | 100 | 65 | 150 | 1.6 | blackish grey | black |

Remark: columns show the following data:
(1) Example number
(2) distilled water used in pretreatment (g/m²)
(3)
   - silk-screen paste obtained by thickening a water solution of a mixture of polycarboxylic acids of iron (5%) and cobalt (3.5%) (expressed as elements) (available under the trademark Metcolour E 285 from Metco s.r.l.) used in Examples Nos. 13, 14 and 15 for treatment (g/m²);
   - silk-screen paste obtained by thickening a water solution of a mixture of polycarboxylic acids of iron (4%), cobalt (2%), and chromium (1%) (expressed as elements) (available under the trademark Metcolour E 296 from Metco s.r.l.) used in Examples Nos. 16, 17 and 18 for treatment (g/m²);
   - silk-screen paste obtained by thickening a 6% water solution of ruthenium organic acid salt (available under the trademark Metcolour P100 from Metco s.r.l.) used in Examples Nos. 19, 20 and 21 for treatment (g/cm²)
(4) distilled water used in posttreatment (g/m²)
(5) colour penetration (mm)
(6) surface colour before smoothing
(7) surface colour after smoothing

### Examples 22 to 41

A series of colouring tests was conducted on the same tiles as and according to the method of Example 1 except that ruthenium organic acid salts were added to other types of colouring salts solutions. Tiles pretreatment was carried out with 100 g/m² water, treatment with 200 g/m² colouring solution, and posttreatment with 100 g/m² water.

The parameters used in the various tests and the results obtained are reported in Table 4.

**Table 4**

| (1) | (2) | (3) | (4) | (5) | (6) |
|---|---|---|---|---|---|
| 22 | 10 Fe | 0 | 1.4 | Havana brown | Havana brown |
| 23 | 10 Fe | 0.5 | 1.6 | brown | brown |
| 24 | 10 Fe | 1 | 1.8 | chestnut-brown | dark chestnut-brown |
| 25 | 10 Fe | 2 | 1.8 | chestnut-brown | blackish chestnut-brown |
| 26 | 5 Ni | 0 | 1.5 | pale Havana brown | pale Havana brown |
| 27 | 5 Ni | 0.5 | 1.6 | Havana brown | strong Havana brown |
| 28 | 5 Ni | 1 | 1.8 | Havana brown | dark Havana brown |
| 29 | 5 Ni | 2 | 1.8 | dark beige | blackish beige |
| 30 | 6 Co | 0 | 1.6 | sky-blue | sky-bluish blue |
| 31 | 6 Co | 0.5 | 1.8 | blue | dark blue |
| 32 | 6 Co | 1 | 1.8 | blue | midnight blue |
| 33 | 6 Co | 2 | 1.8 | dark blue | blackish blue |
| 34 | 6 Cr | 0 | 1.4 | Havana-brownish green | Havana-brownish green |
| 35 | 6 Cr | 0.5 | 1.6 | Havana-brownish green | chestnut-brownish green |
| 36 | 6 Cr | 1 | 1.8 | chestnut-brownish green | greyish green |
| 37 | 6 Cr | 2 | 1.8 | greyish green | blackish green |
| 38 | 6 V | 0 | 1.6 | pale Havana brown | pale Havana brown |
| 39 | 6 V | 0.5 | 1.6 | pale grey | pale grey |
| 40 | 6 V | 1 | 1.8 | dark grey | dark grey |
| 41 | 6 V | 2 | 1.8 | dark grey | blackish grey |

Remark: columns show the following data:
(1) Example number
(2) by wt. % amount of the metal (expressed as element) in the form of organic complex based on polycarboxylic acids in the water solution of a the colouring composition;
(3) by wt. % amount of ruthenium (expressed as element) added to the colouring mixture in the form of organic acid salt, available under the trademark Metcolour P100
(4) colour penetration (mm)
(5) surface colour before smoothing
(6) surface colour after smoothing

## Claims

1. Process for colouring articles of ceramic material on surface and inside up to a depth of 2 mm, comprising the application on said articles of an aqueous solution, in amount of 30-600 g/m² of coloured surface, containing a ruthenium salt of mono- or poly-carboxylic organic acid containing 1 to 18 C atoms, with 1 to 3 hydroxylic and/or 1 to 3 aminic substituents, if any, in the aliphatic chain, and subsequent ceramic firing of said articles at temperature up to 1200°C.

2. Process for colouring articles of ceramic material according to claim 1 wherein the aqueous solution contains from 0.5% up to 15% by weight of Ru.

3. Process for colouring articles of ceramic material according to claim 1 wherein the aqueous solution besides ruthenium compound contains also one or more organic compounds of metals different from Ru and suitable for colouring ceramic materials, and wherein in said solution the content of Ru (expressed as Ru metal) is comprised between 2% and 15% by weight of the total amount of the other metallic compounds (expressed as metals).

4. Process for colouring articles of ceramic material according to one of the preceding claims wherein the aqueous solution is added with a thickening agent which gives to the solution the consistency of a paste suitable for the application on the ceramic articles with the silk screen method.

5. Process for colouring articles of ceramic material according to one of the preceding claims, characterized by the following operative steps:
a) drying at 100°C the moulded article to be coloured to a water residue of 0.5% by weight max.;
c) treating the article coming from the preceding step with the colouring composition in water solution in an amount of 30 to 600 g/m² of the coloured surface;
e) equalization of the article coming from the preceding step, at room temperature for a period of 8 hours and subsequent firing according to the normal ceramic cycle.

6. Process for colouring articles of ceramic material according to claim 5, wherein between step a) and step c) the following step is carried out:
b) pre-treating of the dried article with water in an amount of max. 300 g/m² of said article surface.

7. Process for colouring articles of ceramic material according to claim 5, wherein between step c) and step e) the following step is carried out:
d) post-treatment of the article from preceding step with water in an amount of max. 300 g/m² of said article surface.

8. Process for colouring articles of ceramic material according to claim 5, wherein both the intermediate steps b) and d) are carried out.

9. Process according to claim 3, wherein the metals other than ruthenium are selected from: cobalt, iron, chromium, vanadium and nickel.

## Patentansprüche

1. Verfahren zur Färbung von Gegenständen aus keramischem Material auf der Oberfläche und im Inneren bis zu einer Tiefe von 2 mm, umfassend das Aufbringen einer wäßrigen Lösung auf die Gegenstände in einer Menge von 30 bis 600 g/m² bezogen auf die gefärbte Oberfläche, enthaltend ein Rutheniumsalz einer Mono- oder Polycarbonsäure, enthaltend 1 bis 18 C-Atome, gegebenenfalls mit 1 bis 3 Hydroxylsubstituenten und/oder gegebenenfalls 1 bis 3 Aminsubstituenten in der aliphatischen Kette, gefolgt von keramischem Brennen der Gegenstände bei einer Temperatur bis zu 1200°C.

2. Verfahren zum Färben von Gegenständen aus keramischem Material nach Anspruch 1, wobei die wäßrige Lösung 0,5 % bis 15 Gew.-% Ru enthält.

3. Verfahren zum Färben von Gegenständen aus keramischem Material nach Anspruch 1, wobei die wäßrige Lösung neben der Rutheniumverbindung ebenfalls eine oder mehrere metallorganische Verbindungen enthält, die verschieden von Ru und zum Färben von Keramik geeignet sind, und wobei in der Lösung der Gehalt an Ru (ausgedrückt als Ru-Metall) zwischen 2 % und 15 Gew.-%, bezogen auf die Gesamtmenge der anderen metallischen Verbindungen (ausgedrückt als Metalle), beträgt.

4. Verfahren zum Färben von Gegenständen aus keramischem Material nach einem der vorstehenden Ansprüche, wobei die wäßrige Lösung mit einem Verdickungsmittel versetzt wird, welches der Lösung die Konsistenz einer Paste verleiht, die zur Anwendung auf Keramik mittels Siebdruckverfahren geeignet sind.

5. Verfahren zum Färben von Gegenständen aus keramischem Material nach einem der vorstehenden Ansprüche, gekennzeichnet durch die nachstehenden Schritte:
(a) Trocknen des zu färbenden Gegenstandes bei 100°C bis zu einem Wasserrest von maximal 0,5 Gew.-%,
(c) Behandeln des Gegenstandes des vorstehenden Schritts mit der Zusammensetzung zum Färben in wäßriger Lösung in einer Menge von 30 bis 600 g/m² bezogen auf die gefärbte Oberfläche;
(e) Konditionieren des Gegenstands des vorstehenden Schritts bei Raumtemperatur über einen Zeitraum von 8 Stunden gefolgt von Brennen gemäß üblichem Zyklus für Keramik.

6. Verfahren zum Färben von Gegenständen aus keramischem Material nach Anspruch 5, wobei zwischen Schritt a) und Schritt c) der nachstehende Schritt ausgeführt wird:
b) Vorbehandeln des getrockneten Gegenstands mit Wasser in einer Menge von maximal 300 g/m² bezogen auf die Oberfläche des Gegenstands.

7. Verfahren zum Färben von Gegenständen aus keramischem Material nach Anspruch 5, wobei zwischen Schritt c) und Schritt e) der nachstehende Schritt ausgeführt wird:
(d) Nachbehandeln des Gegenstands des vorstehenden Schritts mit Wasser in einer Menge von maximal 300 g/m² bezogen auf die Oberfläche des Gegenstands.

8. Verfahren zum Färben von Gegenständen aus keramischem Material nach Anspruch 5, wobei beide Zwischenschritte b) und d) ausgeführt werden.

9. Verfahren nach Anspruch 3, wobei die von Ruthenium verschiedenen Metalle gewählt sind aus: Kobalt, Eisen, Chrom, Vanadium und Nickel.

## Revendications

1. Procédé pour la coloration d'articles de matériau céramique sur la surface et à l'intérieur de l'article jusqu'à une profondeur de 2 mm, comprenant l'application sur ces articles d'une solution aqueuse en une quantité de 30 à 600 g/m² de la surface colorée, contenant un sel de ruthénium d'acide mono- ou polycarboxylique contenant 1 à 18 atomes de carbone, dont la chaîne aliphatique comprend 1 à 3 substituants hydroxy et/ou 1 à 3 substituants amino, s'il y en a, et la cuisson céramique ultérieure de ces articles à une température allant jusqu'à 1200°C.

2. Procédé pour la coloration d'articles de matériau céramique suivant la revendication 1, dans lequel la solution aqueuse contient de 0,5% jusqu'à 15% en poids de Ru.

3. Procédé pour la coloration d'articles de matériau céramique suivant la revendication 1, dans lequel la solution aqueuse contient, à côté du composé du ruthénium, également un ou plusieurs composés organiques de métaux différents de Ru et convenables pour la coloration de matériaux céramiques, et dans lequel, dans cette solution, la teneur en Ru (exprimée en tant que Ru métallique) est comprise entre 2% et 15% en poids de la quantité totale des autres composés métalliques (exprimés en tant que métaux).

4. Procédé pour la coloration d'articles de matériau céramique suivant l'une quelconque des revendications précédentes, dans lequel la solution aqueuse est ajoutée avec un agent épaississant qui donne à la solution la consistance d'une pâte convenable pour l'application sur les articles céramiques par la technique de sérigraphie.

5. Procédé pour la coloration d'articles de matériau céramique suivant l'une quelconque des revendications précédentes, caractérisé par les étapes de réalisation suivantes :
(a) séchage à 100°C de l'article moulé à colorer jusqu'à un résidu d'eau de 0,5% en poids au maximum;
(c) traitement de l'article provenant de l'étape précédente avec la composition de coloration en solution aqueuse en une quantité de 30 à 600 g/m² de la surface colorée;
(e) mise de l'article provenant de l'étape précédente à la température ambiante pendant une période de 8 heures et ensuite cuisson selon le cycle céramique normal.

6. Procédé pour la coloration d'articles de matériau céramique suivant la revendication 5, dans lequel entre l'étape (a) et l'étape (c), il est effectué l'étape suivante :
(b) un pré-traitement de l'article séché avec de l'eau en une quantité maximum de 300 g/m² de la surface de produit céramique.

7. Procédé pour la coloration d'articles de matériau céramique suivant la revendication 5, dans lequel entre l'étape (c) et l'étape (e), il est effectué l'étape suivante :
(d) un post-traitement de l'article provenant de l'étape précédente avec de l'eau en une quantité maximum de 300 g/m² de la surface de cet article.

8. Procédé pour la coloration d'articles de matériau céramique suivant la revendication 5, dans lequel les deux étapes intermédiaires (b) et (d) sont effectuées.

9. Procédé pour la coloration d'articles de matériau céramique suivant la revendication 3, dans lequel les métaux autres que le ruthénium sont choisis parmi le cobalt, le fer, le chrome, le vanadium et le nickel.
